# EUROPÄISCHE PATENTANMELDUNG

(11) **EP 1 862 736 A2**
(43) Veröffentlichungstag der Anmeldung: **05.12.2007**
(21) Anmeldenummer: 07010297.5
(22) Anmeldetag: 23.05.2007
(51) Int. Cl.: F23C 9/00

(54) **Verfahren und Vorrichtung zum Einspeisen von Oxidationsmittel in eine Verbrennungseinrichtung**

(30) Priorität: 01.06.2006 DE 102006025681
(71) Anmelder: Linde Aktiengesellschaft, 80807 München (DE)
(72) Erfinder: Beysel, Gerhard, Dr., 82515 Wolfratshausen (DE); Ohlig, Klaus, 82131 Gauting (DE)

(57) **Zusammenfassung**

Die Erfindung betrifft ein Verfahren zur Einspeisung von Sauerstoff enthaltenem Gas (6, 9) in den Feuerraum (F) einer Verbrennungseinrichtung (V), wobei eine Teilmenge des aus der Verbrennungsanlage austretenden Rauchgasstromes (Recyclegas) (5) einer Druckerhöhung unterzogen und anschließend in den Feuerraum (F) zurückgeführt wird, sowie eine Vorrichtung zur Durchführung des Verfahrens. Ein Sauerstoff enthaltendes Gas, das mit einem ausreichend hohen Druck vorliegt (9), wird dem Recyclegas (8) nach der Druckerhöhung zugemischt.

## Beschreibung

Die Erfindung betrifft ein Verfahren zur Einspeisung von Sauerstoff enthaltendem Gas in den Feuerraum einer Verbrennungseinrichtung, wobei eine Teilmenge des aus der Verbrennungseinrichtung austretenden Rauchgasstromes (Recyclegas) einer Druckerhöhung unterzogen und anschließend in den Feuerraum zurückgeführt wird, sowie eine Vorrichtung zur Durchführung des Verfahrens.

Die bei der Verbrennung von kohlenstoffhaltigen Energieträgern wie Kohle oder Erdöl entstehenden Rauchgase enthalten neben Wasser und Kohlendioxid eine Reihe von die Umwelt schädigenden Stoffen, wie beispielsweise Stickoxide (NOₓ) und Schwefeldioxid (SO₂). In industriellen Energieerzeugungsanlagen werden deshalb u. a. Rauchgasreinigungsanlagen den Verbrennungseinrichtungen nachgeschaltet, um den Schadstoffanteil im Rauchgas zu vermindern. Rauchgasreinigung, wie z. B. Entschwefelung, Entstaubung und Entstickung, zählt zu den Sekundärmaßnahmen, welche den gesamten Energieumwandlungsprozess umweltfreundlicher gestalten. Primär können jedoch schon Maßnahmen ergriffen werden, um die Bildung der entsprechenden Schadstoffe bereits beim Verbrennungsprozess weitgehend zu minimieren.

Zur Einhaltung der immer niedrigeren Schadstoffgrenzwerte und um die Aufwendungen für Sekundärmaßnahmen zu verringern, werden Primärmaßnahmen zur Vermeidung der Schadstoffbildung immer wichtiger. Diese bestehen bei der Vermeidung der Staubbildung vornehmlich in der Verbrennungsführung und bei der Verringerung von schwefelhaltigen Schadstoffen in der Auswahl der Brennstoffe.

Große Anstrengungen werden auch zur Reduzierung der NOₓ-Emissionen unternommen. Man kennt sieben verschiedene Stickoxide, von denen Stickstoffmonoxid (NO) und Stickstoffdioxid (NO₂) am stabilsten sind, und daher im Wesentlichen die NOₓ-Belastung von Rauchgasen ausmachen. Stickstoffmonoxid entsteht in der Hauptsache allein aus dem Stickstoff der zugeführten Verbrennungsluft bei hinreichend langen Verweilzeiten der Verbrennungsgase im Brennraum bei Temperaturen oberhalb von 1000°C und genügend hoher Sauerstoffkonzentration. Da die Verbrennungsluft zu 78% aus Stickstoff besteht, machen die aus dem Luftstickstoff gebildeten Stickoxide einen Großteil der Schadstoffbelastung aus. Je nach Brennstoff und Feuerungsart liegt der NOₓ-Gehalt im Rauchgas zwischen 500 und 2000mg/m_{N}³.

In der Offenlegungsschrift DE10356701 wird ein Verfahren zur Verbrennung von fossilen Brennstoffen in einem Dampferzeuger beschrieben. Die Verbrennungsluft wird hier durch ein Oxidationsmittel ersetzt, das sich im Wesentlichen aus Kohlendioxid (CO₂), das aus dem bei der Verbrennung entstehendem Rauchgas abgetrennt wird, und Sauerstoff zusammensetzt, und die Verbrennung unter Luftausschluss durchgeführt. Wegen des im Oxidationsmittel weitgehend fehlenden Stickstoffs, enthalten die Rauchgase nur die NOₓ-Mengen, die aus dem im Brennstoff gebundenen Stickstoff gebildet werden, und bestehen fast ausschließlich aus Wasser und CO₂.

Der maßgebliche Grund, die Verbrennungsluft durch ein Oxidationsmittel zu ersetzen, das sich im Wesentlichen aus Kohlendioxid (CO₂) und Sauerstoff zusammensetzt, ist jedoch die Möglichkeit, nach der Verbrennung mit fossilen Brennstoffen das CO₂ durch Kondensation von Wasser leicht abtrennen zu können und dies zu sequestrieren. Dieser Aspekt gewinnt zunehmend an Bedeutung, da im Rahmen der Veränderung des weltweiten Klimas die CO₂ Emissionen, die durch die Verarbeitung nicht regenerativer Energiequellen entstehen, reduziert werden müssen. Das Kyoto Protokoll regelt die zulässigen CO₂ Emissionen der einzelnen Mitgliedsländer und nennt die in den kommenden Jahren zu erzielenden Emissionsminderungen.

Die Aufgabe der vorliegenden Erfindung ist es, ein Verfahren sowie eine Vorrichtung der eingangs beschriebenen Art anzugeben, die es ermöglichen, Sauerstoff enthaltendes Gas mit geringem Energie- und Regelaufwand in den Feuerraum einer Verbrennungsanlage einzuspeisen.

Diese Aufgabe wird verfahrensseitig erfindungsgemäß dadurch gelöst, dass ein Sauerstoff enthaltendes Gas, das mit einem ausreichend hohen Druck vorliegt, dem Recyclegas nach der Druckerhöhung zugemischt wird.

Als "ausreichend hoch" ist hierbei der Druck eines Sauerstoff enthaltenden Gases anzusehen, wenn er zumindest soweit über dem Druck liegt, den das Recyclegas nach der Druckerhöhung besitzt, dass allein aufgrund der Differenz der beiden Gasdrücke die maximal für den Verbrennungsprozess geforderte Menge an Sauerstoff enthaltendem Gas in das Recyclegas einströmt und mit diesem - und mit evtl. dem Recyclegas an anderen Stellen zugeführten Gasströmen - homogen vermischt wird.

Um der Verbrennungseinrichtung in jedem Betriebszustand die richtige Menge eines Sauerstoff enthaltenden Gases zuführen zu können, das mit ausreichend hohem Druck vorliegt, sieht eine Ausgestaltung des erfindungsgemäßen Verfahrens vor, dass das Sauerstoff enthaltende Gas über ein, sinnvoller Weise einstellbares Drosselorgan geführt wird, wobei über das Drosselorgan ein Druckverlust erzeugt wird, der so groß ist, dass das Sauerstoff enthaltende Gas mit der richtigen Menge in das Recyclegas einströmt und mit diesem - und mit evtl. dem Recyclegasstrom an anderen Stellen zugeführten Gasströmen - homogen vermischt wird.

Ein Sauerstoff enthaltendes Gas, das mit einem Druck vorliegt, der gleich hoch oder niedriger ist als der "ausreichend hohe Druck", wird erfindungsgemäß dem Recyclegas vor der Druckerhöhung zugemischt. Gegebenenfalls wird der Druck des Sauerstoff enthaltenden Gases erhöht oder erniedrigt, um zu erreichen, dass es in der für den Verbrennungsprozess benötigten Menge in das Recyclegas einströmt und mit diesem gemischt wird.

Als Sauerstoff enthaltende Gase werden erfindungsgemäß Luft und/oder Sauerstoff und/oder mit Stickstoff angereicherter Sauerstoff in das Recyclegas eingeleitet, mit diesem bevorzugt homogen vermischt, der anschließend in den Feuerraum eingeleitet wird.

Das erfindungsgemäße Verfahren weiterbildend, wird vorgeschlagen, dass Sauerstoff oder mit Stickstoff angereicherter Sauerstoff aus einer Luftzerlegungseinrichtung zugeführt werden, die zweckmäßiger Weise in unmittelbarer Nähe der Verbrennungseinrichtung betrieben wird.

Bevorzugt wird das erfindungsgemäße Verfahren zum Betrieb einer Verbrennungseinrichtung eingesetzt, in der das Rauchgas von Asche und Wasser gereinigt wird, bevor ein Teil des Rauchgases als Recyclegas zurückgeführt wird. Besonders bevorzugt handelt es sich bei der Verbrennungseinrichtung um den Dampferzeuger eines thermischen Kraftwerkes.

Vorrichtungsseitig wird die gestellte Aufgabe erfindungsgemäß dadurch gelöst, dass ein Sauerstoff enthaltendes Gas, das mit einem ausreichend hohen Druck vorliegt, über eine Mischeinrichtung dem Recyclegas nach der Druckerhöhung zuführbar ist.

Bevorzugt weist die Mischeinrichtung zumindest Anschlüsse für das Sauerstoff enthaltende Gas und Recyclegas und wenigstens einen Ausgang auf, aus dem eine weitgehend homogene, aus dem Sauerstoff enthaltenden Gas, Recyclegas und evtl. dem Recyclegasstrom an anderen Stellen zugeführten Gasströmen bestehende Gasmischung entnehmbar ist.

Besonders bevorzugt sind die Anschlüsse an der Mischeinrichtung so zueinander positioniert, dass eine zumindest annähernd homogene Durchmischung der jeweils dort eingetragenen Medien untereinander sichergestellt ist. Durch eine geeignete Positionierung der Anschlüsse kann das Strömungsverhalten der einströmenden Gase beeinflusst werden, wodurch die Durchmischung gesteuert werden kann. Als besonders vorteilhaft haben sich beispielsweise Mischkammern erwiesen, die Anschlüsse aufweisen, die ein tangentiales Einströmen von Gasen bewirken.

Eine zweckmäßige Ausgestaltung der erfindungsgemäßen Vorrichtung sieht vor, dass in unmittelbarer Nähe der Verbrennungseinrichtung eine Luftzerlegungseinrichtung angeordnet ist, aus der ein Sauerstoff enthaltendes Gas, bei dem es sich um Sauerstoff oder um mit Stickstoff angereicherten Sauerstoff handelt, mit einem ausreichend hohen Druck beziehbar ist. Bevorzugt handelt es sich bei der Luftzerlegungseinrichtung um einen kryogenen Luftzerleger oder um eine Druckwechseladsorptionsanlage (PSA).

Um Sauerstoff enthaltendes Gas jederzeit in der für den Verbrennungsprozess erforderlichen Menge in das Recyclegas einmischen zu können, ist im Strömungsweg des Sauerstoff enthaltenden Gases eine geeignete Drosselleinrichtung vorgesehen, die zweckmäßiger Weise so einstellbar ist, dass das Sauerstoff enthaltende Gas bei seiner Strömung über die Drosseleinrichtung zu jeder Zeit einen geeignet großen Druckverlust erfährt.

Eine bevorzugte Ausgestaltung der erfindungsgemäßen Vorrichtung sieht vor, dass es sich bei der Verbrennungseinrichtung um den Dampferzeuger eines thermischen Kraftwerkes handelt.

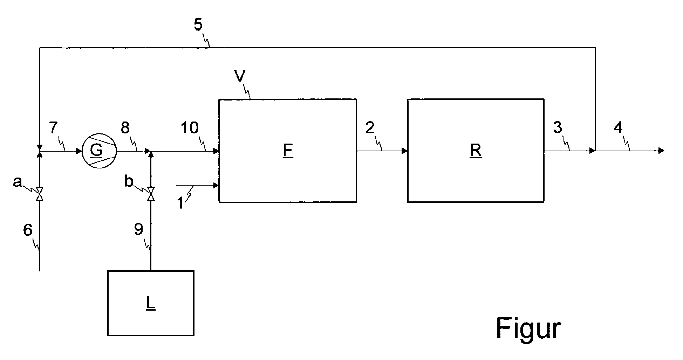

Im Folgenden soll die Erfindung anhand eines in der Figur schematisch dargestellten Ausführungsbeispiels näher erläutert werden, bei welchem ein Recyclegas mit Luft und Sauerstoff zu einem Oxidationsmittel gemischt und in den Verbrennungsprozess zurückgeführt wird.

Im Feuerraum F einer Verbrennungseinrichtung V wird durch Verbrennung eines über Leitung 1 zugeführten Brennstoffes ein Rauchgas erzeugt, dessen fühlbare Wärme zu einem Großteil in einem nicht dargestellten Folgeprozess genutzt wird. Das abgekühlte Rauchgas wird über Leitung 2 aus der Verbrennungseinrichtung abgezogen und in die Rauchgasreinigung R eingeleitet, aus der es, von Asche und Wasser gereinigt, über Leitung 3 abgeführt wird. Ein Teil des asche- und wasserfreien Rauchgases strömt anschließend über Leitung 4 zu einer Rauchgasaufbereitung und CO₂ Sequestrierung (nicht dargestellt), während der verbleibende Rest über Leitung 5 als Recyclegas vor die Verbrennungseinrichtung zurückgeführt wird. Augrund der Druckverluste in der Verbrennungseinrichtung, der Rauchgasreinigung und den Rohrleitungen liegt das Recyclegas vor dem Verdichter G mit einem Druck vor, der kleiner ist als der Luftdruck. Über Leitung 6 wird ein Luftstrom, dessen Größe über das einstellbare Regelorgan a kontrolliert wird, vor dem Verdichter G in den Recyclegasstrom 5 eingeleitet. Der so erzeugte, aus Luft und Recyclegas bestehende Gasstrom wird über Leitung 7 in den Verdichter G eingeleitet, wo er eine Druckerhöhung auf einen Wert erfährt, der deutlich größer ist als der Luftdruck, und über Leitung 8 weiter geführt.

Im Luftzerleger L wird ein Sauerstoff mit einem Druck erzeugt, der höher ist als der Druck des aus Luft und Recyclegas bestehenden Gasstromes in Leitung 8. Über Leitung 9 wird ein Sauerstoffstrom, dessen Größe über das einstellbare Regelorgan b kontrolliert wird, aus dem Luftzerleger L geführt und hinter dem Verdichter G in den aus Luft und Recyclegas bestehenden Gasstrom eingeleitet. Der so erzeugte Gasstrom wird über Leitung 9 der Verbrennungseinrichtung V zugeführt, wobei eine weitgehend homogene Gasmischung 10 erzeugt wird, die als Oxidationsmittel in den Feuerraum F eingeleitet wird.

## Patentansprüche

1. Verfahren zur Einspeisung von Sauerstoff enthaltendem Gas in den Feuerraum einer Verbrennungseinrichtung, wobei eine Teilmenge des aus der Verbrennungseinrichtung austretenden Rauchgasstromes (Recyclegas) einer Druckerhöhung unterzogen und anschließend in den Feuerraum zurückgeführt wird, **dadurch gekennzeichnet, dass** ein Sauerstoff enthaltendes Gas, das mit einem ausreichend hohen Druck vorliegt, dem Recyclegas nach der Druckerhöhung zugemischt wird.

2. Verfahren nach Anspruch 1, **dadurch gekennzeichnet, dass** es sich bei den Sauerstoff enthaltenen Gasen um Luft und/oder Sauerstoff und/oder mit Stickstoff angereichertem Sauerstoff handelt.

3. Verfahren nach Anspruch 2, **dadurch gekennzeichnet, dass** Sauerstoff oder mit Stickstoff angereicherter Sauerstoff von einer Luftzerlegungseinrichtung bezogen werden.

4. Verfahren nach einem der Ansprüche 1 bis 3, **dadurch gekennzeichnet, dass** es sich bei dem Recyclegas um gereinigtes Rauchgas handelt.

5. Verfahren nach einem der Ansprüche 1 bis 4, **dadurch gekennzeichnet, dass** Sauerstoff enthaltendes Gas in den Feuerraum des Dampferzeugers eines thermischen Kraftwerkes eingespeist wird.

6. Vorrichtung zur Einspeisung von Sauerstoff enthaltenem Gas in den Feuerraum einer Verbrennungseinrichtung, wobei eine Teilmenge des aus der Verbrennungseinrichtung austretenden Rauchgasstromes (Recyclegas) einer Druckerhöhung unterzogen und anschließend in den Feuerraum zurückgeführt wird, **dadurch gekennzeichnet, dass** ein Sauerstoff enthaltendes Gas, das mit einem ausreichend hohen Druck vorliegt, über eine Mischeinrichtung dem Recyclegas nach der Druckerhöhung zuführbar ist.

7. Vorrichtung nach Anspruch 6, **dadurch gekennzeichnet, dass** in unmittelbarer Nähe der Verbrennungseinrichtung eine Luftzerlegungseinrichtung vorgesehen ist, aus der ein Sauerstoff enthaltenes Gas, bei dem es sich um Sauerstoff oder um mit Stickstoff angereicherten Sauerstoff handelt, mit einem ausreichend hohen Druck beziehbar ist.

8. Vorrichtung nach einem der Ansprüche 6 oder 7, **dadurch gekennzeichnet, dass** es sich bei der Luftzerlegungseinrichtung um einen kryogenen Luftzerleger oder um eine Druckwechseladsorptionsanlage (PSA) handelt.

9. Vorrichtung nach einem der Ansprüche 6 bis 8, **dadurch gekennzeichnet, dass** es sich bei der Verbrennungseinrichtung um den Dampferzeuger eines thermischen Kraftwerkes handelt.
